## Europäisches Patentamt
## European Patent Office
## Office européen des brevets

(11) Veröffentlichungsnummer: **0 093 456**
A1

(12) # EUROPÄISCHE PATENTANMELDUNG

(21) Anmeldenummer: 83104666.9

(22) Anmeldetag: 29.04.81

(51) Int. Cl.³: **C 08 K 3/30**
C 09 K 11/02, C 08 L 21/00

(30) Priorität: 20.05.80 DE 3019260

(43) Veröffentlichungstag der Anmeldung:
09.11.83 Patentblatt 83/45

(84) Benannte Vertragsstaaten:
AT BE CH FR GB IT LI LU NL SE

(60) Veröffentlichungsnummer der früheren
Anmeldung nach Art. 76 EPÜ: 0 040 710

(71) Anmelder: Kollmer, Peter
Bertholdstrasse 18
D-7630 Lahr(DE)

(72) Erfinder: Kollmer, Peter
Bertholdstrasse 18
D-7630 Lahr(DE)

(74) Vertreter: Patentanwälte Henkel, Pfenning, Feiler,
Hänzel & Meinig
Möhlstrasse 37
D-8000 München 80(DE)

(54) Verwendung von bindemittelfreiem, nachleuchtendem ZnS zum Markieren von aus Gummi oder Kunststoffen bestehenden Gegenständen.

(57) Beschrieben wird die Verwendung von bindemittelfrei-em, und nachleuchtenden ZnS zur Nachleucht-Markierung der verschiedensten Gegenstände wie Gummimassen zur Reifenherstellung, Bällen, Kleidungsstücken und dgl.

EP 0 093 456 A1

Croydon Printing Company Ltd.

## B e s c h r e i b u n g

"Verwendung von Bindemittelfreiem, nachleuchtendem ZnS
zum Markieren von aus Gummi  oder Kunststoffen bestehenden Gegenständen"

Die Erfindung betrifft die Verwendung von bindemittelfreiem, nachleuchtendem ZnS zum Markieren von aus Gummi oder
Kunststoffen bestehenden Gegenständen, insbesondere solchen,
die einer hohen mechanischen Belastung ausgesetzt sind.

Nachleuchtfarben auf der Basis von Zinksulfid, die bei Bestrahlung oder Belichtung für eine gewisse Zeit zum Leuchten angeregt werden, sind bekannt und wurden bereits auf
den verschiedensten Einsatzgebieten zum Einsatz gebracht.
Bei ihrer Verwendung zu Straßenmarkierungszwecken hat es
sich jedoch gezeigt, daß sich das den aktiven Bestandteil
der Nachleuchtfarbe bildende Zinksulfid nicht in geeigneter
Weise auf dem Straßenbelag verankern läßt und einem starken
Abrieb unterliegt. Die Haltbarkeit der mit den bekannten
Nachleuchtfarben aufgebrachten Straßenmarkierungen läßt
somit erheblich zu wünschen übrig.

Aus der DE-AS 26 27 932 ist eine bindemittelhaltige Nachleuchtfarbe mit ZnS als phosphorizierendem Nachleuchtpigment und einem Melaminharz als fluoriszierendem Tagesleuchtpigment als Sicherheitsanstrich für die verschiedensten
Zwecke, bei der Herstellung von Sportbekleidung, Sportgeräten und Planen und für das Einfärben von Kunststoffgegenständen aller Art bekannt.

Bei ersterer Applikationsform ist die bekannte Nachleuchtfarbe zwangsläufig keiner besonderen mechanischen Belastung ausgesetzt.

Offensichtlich ist auch die aus der DE-AS 26 27 932 bekannte
bindemittelhaltige Nachleuchtfarbe gar nicht zum Einsatz
auf Applikationsgebieten, die einer starken mechanischen Belastung ausgesetzt sind, vorgesehen. Dies ist auch schon
wegen der bekannten Sprödigkeitseigenschaften der einen
zwingenden Bestandteil der bekannten Nachleuchtfarbe bildenden Melaminharze nicht sinnvoll, denn Sprödigkeit verträgt
sich nicht mit mechanischer Dauerbelastbarkeit (vg. Stock
"Farben- und Lackindustrie", 13. Auflage, Seite 129).

Aufgrund der Sprödigkeitseigenschaften der Melaminharze
ist nämlich nicht zu erwarten, daß die bekannte Nachleuchtfarbe - wenn sie zum Einfärben von Kunststoffgegenständen
verwendet wird - lange hält, wenn die Kunststoffgegenstände
einer größeren mechanischen Belastung, z.B. Schlageinwirkung,
ausgesetzt werden.

Aus der DE-AS 10 45 016 sind Folien aus nachleuchtenden
ZnS enthaltenden Kunststoffen, z.B. Polyacrylsäureester,
bekannt. Derartige Folien sind jedoch ebenso wie die gemäß
Beispiel 2 der DE-AS 26 27 932 hergestellten Folien keiner
besonderen mechanischen Beanspruchung ausgesetzt.

Es hat sich nun überraschenderweise gezeigt, daß man nachleuchtendes Zinksulfid auf bisher nicht in Erwägung gezogenen Einsatzgebieten zum Einsatz bringen kann. So ist es beispielsweise gelungen, ohne Mitverwendung eines Bindemittels
mit ZnS Gegenstände, die einer starken mechanischen Beanspruchung ausgesetzt sind, dauerhaft nachleuchtend zu markieren.

Ein besonders interessantes neues Einsatzgebiet für
nachleuchtendes Zinksulfid ist die Markierung von
Fahrzeugreifen. In jüngster Zeit hat der Gesetzgeber vorgeschrieben, daß Fahrräder bei Nacht außer durch die vorgeschriebene Beleuchtungsanlage und durch Reflexionsstrahler auch noch durch reflektierende Maßnahmen an den
Fahrradreifen für den Kraftfahrer sichtbar gemacht werden.
Dies geschieht bisher durch Aufkleben oder Einarbeiten von
Reflexionsstreifen an den bzw. in die Seitenwandungen der
Fahrradreifen. Abgesehen davon, daß solche Reflexionsstreifen teuer sind, erfordert ihre Applikation zumindest einen
zusätzlichen Arbeitsgang bei der Reifenherstellung. Es hat
sich nun überraschenderweise gezeigt, daß sich nachleuchtendes Zinksulfid in einer Teilchengröße von 4,5 bis 20,
vorzugsweise von nicht über 8 µm, direkt und ohne jegliches Bindemittel in bei der Reifenherstellung verwendete
natürliche und synthetische Kautschukmassen oder deren
Lösungen in üblichen Lösungsmitteln einarbeiten läßt.
Je nach Wunsch kann das nachleuchtende Zinksulfid entweder nur der zur Ausbildung der Seitenteile der Reifen
dienenden Kautschukmasse oder aber sämtlichen bei der
Reifenherstellung verwendeten Kautschukmassen einverleibt
werden. Die Menge an zugesetztem Zinksulfid beträgt bis
zu 15 g, vorzugsweise bis zu 8 g pro fertigen Fahrradreifen.

Die Einsetzbarkeit von nachleuchtendem Zinksulfid auf
dem genannten Einsatzgebiet ist in hohem Maße überraschend, da eigentlich zu erwarten war, daß durch
das zusätzliche anorganische Material eine Versprödung
des Kautschuks bei der Vulkanisation oder des fertigen,
nachleuchtenden Gummis im Laufe seines Gebrauchs (unter
hoher mechanischer Beansrpuchung) als Fahrzeugreifen
eintritt. Dies ist aber nicht der Fall.

Selbstverständlich könnten unter Verwendung des nachleuchtenden Zinksulfids und von Kunststoffen beliebiger Art auch "Nachleuchtstreifen" hergestellt und diese, ähnlich wie die bekannten Reflexionsstreifen, auf die Außenseiten der Fahrradreifen aufgeklebt werden. In diesem Falle wird zwar nicht der zusätzliche Arbeitsschritt vermieden, die "Nachleuchtstreifen" sind aber billiger als die bekannten Reflexionsstreifen.

Solche "Nachleuchtstreifen" können im übrigen auch auf sämtliche Unterlagen, z. B. Stoßstangen von Kraftfahrzeugen und dergleichen, die nachts bei Lichteinwirkung besser sichtbar gemacht werden sollen, aufgeklebt werden.

Ein weiteres neues Applikationsgebiet für das nachleuchtende ZnS ist die Markierung von in den Abendstunden verwendetem Sportgerät, z. B. Bällen, wie Fußbällen oder Bällen zum Baseball-Spiel, Rugby und dgl. Ähnlich wie in Kautschukmassen kann das nachleuchtende ZnS auch in Kunststoffmassen, aus denen dann Fußballhüllen hergestellt werden, eingearbeitet werden. Derart "nachleuchtend" gemachte Fußbälle können beim Abendtraining auch bei schwächerem Flutlicht (Energieeinsparung) verwendet werden, da sie infolge ihrer Nachleuchteigenschaften hervorragend sichtbar sind. Überraschenderweise erleiden die anorganisches Material enthaltenden Fußbälle während ihrer Lebensdauer trotz der erheblichen mechanischen Beanspruchung weder eine Einbuße an Nachleuchtfähigkeit noch an Haltbarkeit.

Die folgenden Beispiele sollen die Erfindung näher veranschaulichen.

Beispiel 1

(Kautschukmasse zur Herstellung von nachleuchtenden Teilen von Fahrradreifen)

| | |
|---|---|
| 50 : 50 Gemisch aus Toluol und Xylol | 55 % |
| Kautschuk | 30 % |
| ZnS | 15 % |

Beispiel 2

( andere Kautschukmasse zur Herstellung nachleuchtender Fahrradreifen )

| | |
|---|---|
| ZnS | 18 % |
| Kautschuk | 12 % |
| Perlpigmente | 15 % |
| Toluol | 55 % |

Peter Kollmer

## Patentansprüche

1. Verwendung von bindemittelfreiem, nachleuchtendem ZnS
   zur Einverleibung in aus Gummi oder Kunststoffen bestehenden, zu markierenden Gegenständen, die hoher mechanischer
   Belastung unterliegen.

2. Verwendung nach Anspruch 1, dadurch gekennzeichnet, daß
   es sich bei den Gegenständen um Fahrzeugreifen oder Teile
   derselben handelt.

3. Verwendung nach Anspruch 1, dadurch gekennzeichnet, daß
   es sich bei den Gegenständen um Bälle, insbesondere Fußbälle,
   handelt.

4. Verfahren zum Markieren von aus Gummi oder Kunststoffen bestehenden Gegenständen, die einer hohen mechanischen Belastung
   ausgesetzt sind, unter Verwendung von bindemittelfreiem,
   nachleuchtendem ZnS, dadurch  g e k e n n z e i c h n e t ,
   daß man das ZnS in die Gummi- oder Kunststoffmasse einarbeitet.

**0093456**

Nummer der Anmeldung

Europäisches Patentamt

**EUROPÄISCHER RECHERCHENBERICHT**

EP 83 10 4666

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 145 150 (BUCHER) <br> * Ansprüche 1,4; Beispiele 1-4; Seite 2, Zeilen 31-34 * | 1,3,4 | C 08 K 3/30 <br> C 09 K 11/02 <br> C 08 L 21/00 |
| | --- | | |
| Y | DE-A-2 426 919 (GRAVISSE) <br> * Ansprüche 1-10; Seite 8, letzter Absatz; und die folgende Beispiele * | 1,4 | |
| | --- | | |
| Y | FR-A-2 168 685 (GRAVISSE) <br> * Ansprüche 1,3,8 * | 1,4 | |
| | --- | | |
| Y | CH-A- 385 694 (DR. W. KOFLER) <br> * Anspruch 1 * | 1 | |
| | --- | | |
| Y | GB-A- 697 779 (R.C.W. FROMM et al.) <br> * Anspruch 1 * | 1 | RECHERCHIERTE SACHGEBIETE (Int Cl ³) |
| | --- | | |
| Y | GB-A-2 017 741 (J.E. SHAW et al.) <br> * Zusammenfassung * | 1 | C 08 K 3/30 <br> C 08 L 21/00 <br> C 09 K 11/02 |
| | ----- | | |

Der vorliegende Recherchenbericht wurde für alle Patentansprüche erstellt

| Recherchenort <br> DEN HAAG | Abschlußdatum der Recherche <br> 26-08-1983 | Prüfer <br> DE ROECK R.G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes Dokument